# EUROPÄISCHE PATENTSCHRIFT

(11) **EP 1 051 357 B1**
(45) Veröffentlichungstag und Bekanntmachung des Hinweises auf die Patenterteilung: **30.07.2003**
(21) Anmeldenummer: 99904758.2
(22) Anmeldetag: 09.01.1999
(51) Int. Cl.: C02F 1/32, E03C 1/04

(54) **EINRICHTUNG ZUM ENTKEIMEN VON WASSER, WELCHES EINE SANITÄREINRICHTUNG DURCHSTRÖMT**
DEVICE FOR DEGERMINATING WATER FLOWING THROUGH A SANITARY INSTALLATION
DISPOSITIF POUR STERILISER L'EAU QUI TRAVERSE UNE INSTALLATION SANITAIRE

(30) Priorität: 28.01.1998 DE 19803071
(43) Veröffentlichungstag der Anmeldung: 15.11.2000
(73) Patentinhaber: HANSA METALLWERKE AG, 70567 Stuttgart (DE)
(72) Erfinder: KUNKEL, Horst, D-70199 Stuttgart (DE)
(74) Vertreter: Ostertag, Ulrich, Dr.
(86) Internationale Anmeldenummer: EP9900093
(87) Internationale Veröffentlichungsnummer: WO99038806

(56) Entgegenhaltungen:
- EP-A- 0 806 526
- FR-A- 2 545 473
- NL-A- 9 302 129
- US-A- 3 551 091
- US-A- 4 201 916
- US-A- 4 535 247

## Beschreibung

Die Erfindung betrifft eine Einrichtung zum Entkeimen von Wasser nach dem Oberbegriff des Patentanspruches 1.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe kann eine zusätzliche Filtervorrichtung eingesetzt werden.

Selbstverständlich ist es zur Vermeidung von Hygieneproblemen von großer Bedeutung, die korrekte Funktion der UV-Lampe jederzeit kontrollieren zu können.

Eine Einrichtung der eingangs genannten Art ist aus der FR 25 45 473 A1 bekannt. Bei dieser sind zur Funktionskontrolle der UV-Lampe bestimmte Gehäuseteile transparent ausgeführt, so daß von der UV-Lampe ausgestrahltes Licht nach außen dringen und vom Benutzer beobachtet werden kann. Diese Einrichtung ist eine eigenständige Konstruktion, die für sich alleine nicht in unmittelbarer Zuordnung zu einer Sanitäreinrichtung steht.

Ähnliches gilt für den Gegenstand der NL 93 02 129 A. Auch diese beschreibt eine unabhängige, ein eigenes Gehäuse aufweisende Entkeimungseinrichtung, bei der in der Wand des Gehäuses ein Fenster eingesetzt ist, das auf der Innenseite eine fluoreszierende Beschichtung trägt.

Für die US 42 01 916 A und die US 45 35 247 A gilt sinngemäß dasselbe, ebenso wie für die US 35 51 091 A, die darüber hinaus eine Filtervorrchtung beschreibt, welche von dem zu entkeimenden Wasser durchströmt und von der UV-Lampe bestrahlt wird.

Die EP 0 806 526 A2 schließlich offenbart eine Entkeimungseinrichtung, die in einer Handbrause untergebracht ist. Ein Fenster zur Kontrolle der Funktion der UV-Lampe ist nicht vorgesehen.

Die Parallelanmeldung WO-A-99 38 805, van gleichen Prioritäts- und Anmeldedatum, beansprucht Wasserentkeimungsein richtungen, welche als sanitäre Auslaufarmaturen ausgebildet sind und worin die innere Luftsprudel anordnung UV-durchlässig ist.

Aufgabe der vorliegenden Erfindung ist es, eine Einrichtung der eingangs genannten Art derart auszugestalten, daß mit einfachen Mitteln kontrolliert werden kann, ob die UV-Lampe ausreichend brennt.

Diese Aufgabe wird durch die im Patentanspruch 1 angegebene Einrichtung gelöst.

Die innerhalb des Gehäuses einer erfindungsgemäßen Einrichtung angeordneten Bauelemente, insbesondere die Filtervorrichtung und gegebenenfalls die UV-Lampe, haben nur eine endliche Standzeit im Betrieb und müssen gegebenenfalls ausgetauscht werden. Hierzu muß das Gehäuse ohnehin entlang einer Trennlinie in mehrere Gehäuseteile unterteilt sein. Legt man das oder die erfindungsgemäß vorgehene Fenster in diese Trennlinie, so sind sie nicht nur besonders einfach herzustellen; sie lassen sich auch optisch besondes gefällig in das Gesamtgehäuse integrieren.

In dem Lichtweg von der UV-Lampe zum Äußeren des Gehäuses sollte aus Sicherheitsgründen ein optisches Filter angeordnet sein, welches zumindest für UvC-Strahlung undurchlässig ist. Bekanntlich kann UV-Strahlung, insbesondere die kurzwellige UVC-Strahlung, gesundheitsschädlich sein. Der Austritt dieses Strahlungsanteiles wird durch das optische Filter verhindert.

Zweckmäßigerweise wird als optisches Filter ein Glasrohrstück eingesetzt, welches den Leuchtkörper der UV-Lampe zumindest bereichsweise umgibt. Die axiale Länge dieses Glasrohrstückes wird so gewählt, daß auch auf dem Wege mehrfacher Reflektionen innerhalb des Gehäuses kein ungefiltertes UV-Licht durch das erfindungsgemäß vorgesehene Fenster austreten kann.

Im Lichtweg von der UV-Lampe zum Äußeren des Gehäuses kann ein unter dem Einfluß von UV-Licht im sichtbaren Bereich fluoreszierendes Element angeordnet sein. Dieses dient, wie bereits erwähnt, zur Verstärkung der Leuchterscheinung durch Umwandlung von nicht sichtbarem UV-Licht in sichtbares Licht. Je nach Materialwahl kann das so erzeugte Fluoreszenzlicht unterschiedliche Farbe aufweisen. So lassen sich sehr schöne ästhetische Effekte erzielen.

Das Fenster kann ringartig durch das Gehäuse geführt sein. Sehr viele sanitäre Einrichtungen, so etwa auch Auslaufarmaturen, umfassen ein im gröbsten Sinne zylindrisches Gehäuse. Ein ringartig um dieses zylindrische Gehäuse geführtes Fenster kann aso von allen Seiten her gut beobachtet werden.

Statt eines durchgängig ringförmigen Fensters können auch mehrere auf einem Kreis liegende ringsegmentförmige Fenster durch das Gehäuse geführt sein. Bei dieser Ausgestaltung wird also das Gehäuse durch die Mehrzahl von Fenstern nicht in zwei Teile unterteilt; vielmehr bleibt das Gehäuseteil, in welchem die ringsegmentförmigen Fenster vorgesehen sind, zusammenhängend.

Bei ringförmiger oder annähernd ringförmiger Ausgestaltung des erfindungsgemäßen Fensters kann über dieses ein Ring aus fluoreszierendem Material gelegt sein. Dieser übernimmt die Funktion des oben schon erwähnten fluoreszierenden Elementes und stellt außerdem ein Dekorelement dar, welches beim Betrieb der UV-Lampe leuchtet und von allen Seiten her gut erkennbar ist.

Der Ring ist vorzugsweise aus einem zu Dichtzwecken geeigneten Material hergestellt. Eine gesonderte Dichtung neben dem fluoreszierenden Ring ist also nicht mehr erforderlich.

Ein Ausführungsbeispiel der Erfindung wird nachfolgend anhand der Zeichnung näher erläutert; es zeigen:

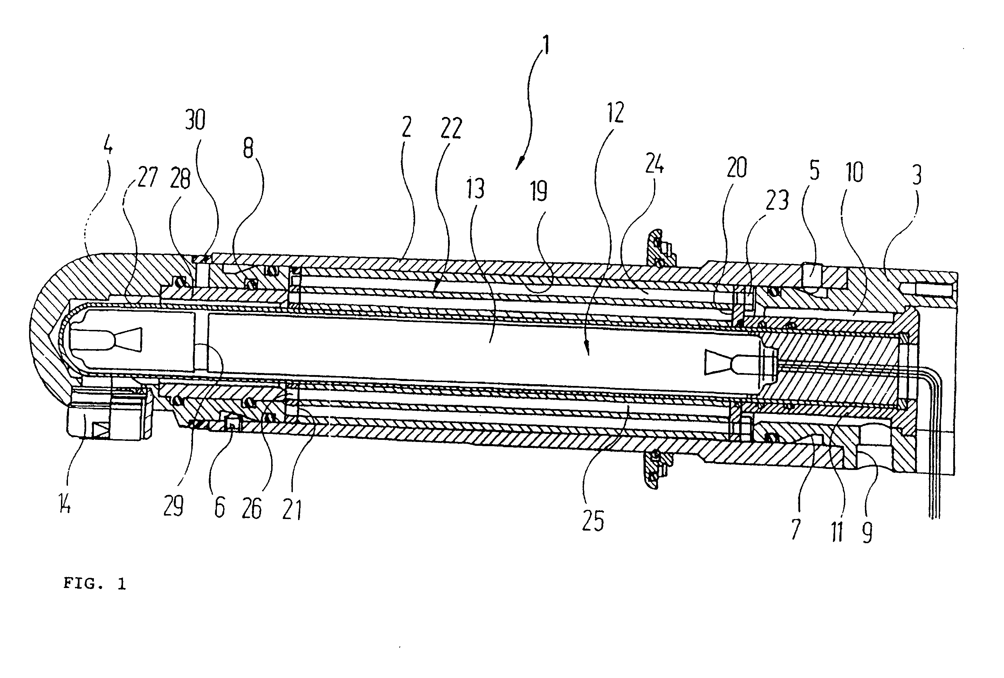

- Figur 1: einen Wannenauslauf, der mit einer Einrichtung zur Entkeimung und Filtrierung von durchlaufendem Wasser versehen ist;
- Figur 2: den Kopfbereich des Wannenauslaufs von Figur 1 in vergrößertem Maßstab;
- Figur 3: einen Schnitt durch Figur 2 gemäß Linie III-III;
- Figur 4: einen Schnitt durch Figur 2 gemäß Linie IV-IV;
- Figur 5: einen Schnitt durch Figur 2 gemäß Linie V-V.

Der Wannenauslauf, der insgesamt durch das Bezugszeichen 1 gekennzeichnet ist, umfaßt einen im wesentlichen hohlzylindrischen Gehäusemantel 2, der an seinem in der Figur rechten, der Gebäudewand benachbarten Ende durch einen Montagesockel 3 und an seinem gegenüberliegenden Ende durch einen Auslaufkopf 4 verschlossen ist. Montagesockel 3 und Auslaufkopf 4 sind jeweils durch eine den Gehäusemantel 2 durchdringende Madenschraube 5 bzw. 6 an dem Gehäusemantel 2 montiert, welche in eine Umfangsnut 7 bzw. 8 an dem Montagesockel 3 bzw. dem Auslaufkopf 4 eingreift.

Der Montagesockel 3 weist eine parallel zur nicht dargestellten Montagewand verlaufende Wasserzulauföffnung 9 auf, die in einen Wasserzulaufraum 10 einmündet. Der Wasserzulaufraum 10 umgibt ringförmig einen Aufnahmesockel 11 für eine UV-Lampe 12, deren Leuchtkörper 13 sich axial durch den gesamten Gehäusemantel 2 hindurch bis in den Auslaufkopf 4 und dort bis über den in diesem vorgesehenen, nach unten zeigenden, als Auslauföffnung dienenden Luftsprudler 14.

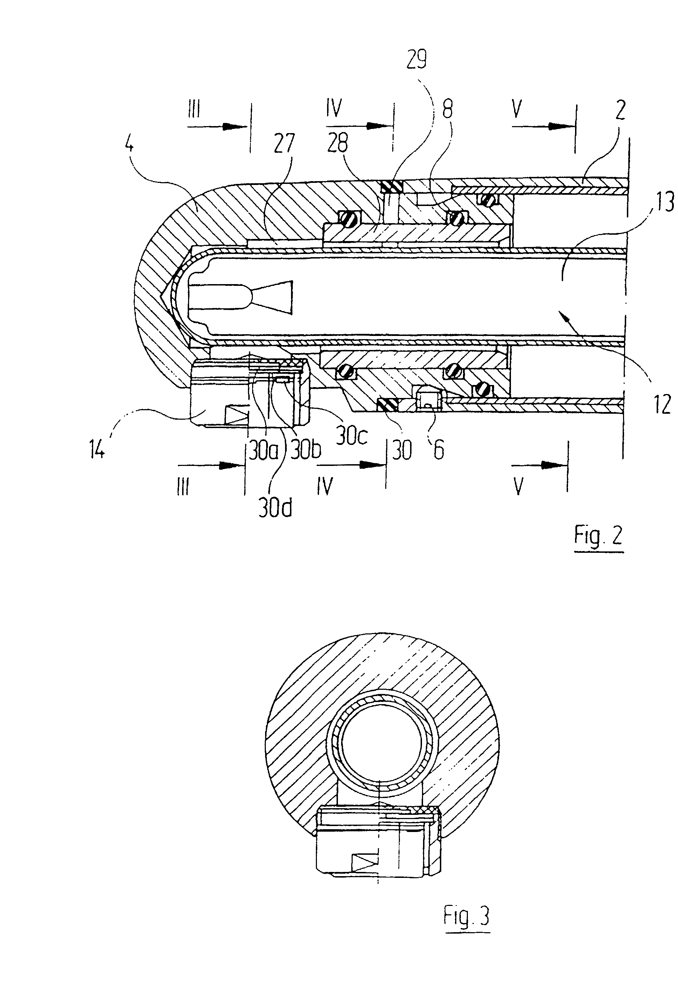

Innerhalb des zylindrischen Gehäusemantels 2 ist ein Behandlungsraum 19 ausgebildet, der an beiden Stirnseiten jeweils durch eine Zwischenplatte 20 bzw. 21 (in Figur 2 weggelassen) begrenzt ist. In dem Behandlungsraum 19 ist eine Filtervorrichtung 22 untergebracht, welche den Leuchtkörper 13 der UV-Lampe 12 ringförmig umgibt und ebenfalls in Figur 2 nicht dargestellt ist. Durchtrittsöffnungen 23 in der ersten Zwischenplatte 20 sorgen dafür, daß das über die Zulauföffnung 9 in den Wasserzulaufraum 10 zuströmende Wasser in einen ersten Teilraum 24 der Filtervorrichtung 22 strömt. Aus diesem durchtritt das Wasser einen filteraktiven Bereich der Filtervorrichtung 22 und gelangt in einen zweiten Teilraum 25, von wo es über Durchgangsöffnungen 26 der zweiten Zwischenplatte 21 in einen ringförmigen Auslaufraum 27 innerhalb des Auslaufkopfes 4 gelangt, welcher mit dem Luftsprudler 14 kommuniziert. Einzelheiten der Ausgestaltung der Filtervorrichtung 22 und der Wasserführung zwischen der Zulauföffnung 9 und dem Luftsprudler 14 sind hier nicht von Interesse.

In eine Erweiterung des nach rechts in der Zeichnung offenen Auslaufkopfes 4 ist ein Glasrohrstück 28 eingeschoben, welches den Leuchtkörper 13 der UV-Lampe 12 auf einem Stück ihrer axialen Länge umgibt. Es besteht aus einem Material, welches für UVC-Strahlung undurchlässig ist, und ist durch O-Ringe in der dargestellten Weise gegen den Auslaufkopf 4 abgedichtet.

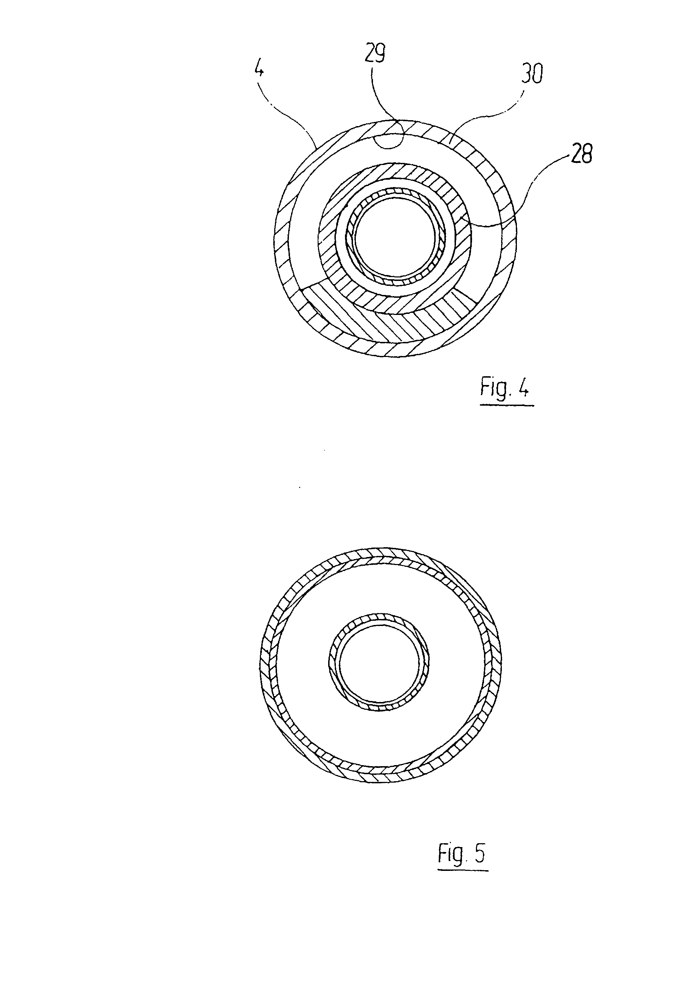

In demjenigen axialen Bereich, in welchem sich das Glasrohrstück 28 befindet, ist der Auslaufkopf 4 mit einem ringsegmentartigen Fenster 29 (vgl. Figur 4) versehen. Über diesem Fenster 29 ist ein Ring 30 aus einem transparenten, nicht notwendig klaren aber fluoreszierendem Kunststoffmaterial eingelegt. Dieser Ring 30 übernimmt gleichzeitig die Abdichtung zwischen dem hohlzylindrischen Gehäusemantel 2 und dem Auslaufkopf 4.

Die Funktion der beschriebenen Einrichtung ist wie folgt:

Wird ein in der Zeichnung nicht dargestelltes Ventil geöffnet, so strömt Wasser über die Zulauföffnung 9 und den Wasserzulaufraum 10 in den Behandlungsraum 19 ein. Zu diesem Zeitpunkt ist in hier nicht interessierender Weise die UV-Lampe 12 bereits eingeschaltet. Das Wasser, welches über den ersten Teilraum 24 der Filtervorrichtung 22, den filteraktiven Bereich der Filtervorrichtung 22, den zweiten Teilraum 25 und über die Durchgangsöffnungen 26 der zweiten Zwischenplatte 21 zum Auslaufraum 27 und von dort zum Luftsprudler 14 fließt, wird also von den Strahlen, welche die UV-Lampe 12 aussendet, erreicht. Hierin befindliche Mikroorganismen werden abgetötet. Beim Durchströmen der Filtervorrichtung 22 werden diese Mikroorganismen außerdem zurückgehalten.

Das von dem Leuchtkörper 13 der UV-Lampe 12 ausgesandte UV-Licht, welches von dem Glasrohrstück 28 nicht zurückgehalten wird, also insbesondere das UVA- und das UVB-Licht sowie gegebenenfalls sichtbare Lichtanteile, durchtreten die Fensteröffnungen 29 in dem Auslaufkopf 4 und beleuchten den Ring 30 von der Innenseite her. Sichtbares Licht kann diesen Ring unmittelbar durchdringen. UVA- und UVB-Licht wird auf dem Wege der Fluoreszenz vom Material des Ringes 30 ebenfalls in sichtbares Licht umgewandelt, so daß der Ring 30 während der Funktion der UV-Lampe 12 hell leuchtet. Auf diese Weise wird dem Benutzer die Funktion der UV-Lampe 12 deutlich sichtbar signalisiert.

Muß die Filtervorrichtung 22 ausgewechselt werden, kann der Auslaufkopf 4 einfach nach Lösen der Madenschraube 6 von dem Gehäusemantel 2 abgezogen werden, worauf die zweite Zwischenplatte 21 freiliegt. Diese kann jetzt aus dem Gehäusemantel 2 herausgezogen werden. Nun ist die Filtervorrichtung 22 zum Auswechseln zugänglich. Die Wiedermontage der verschiedenen Teile erfolgt in umgekehrter Reihenfolge.

## Patentansprüche

1. Einrichtung zum Entkeimen von Wasser mit
a) einem Gehäuse (2, 3, 4), welches einen Einlaß (9) und einen Auslaß (14) für das Wasser aufweist;
b) einer UV-Lampe (12), die innerhalb des Gehäuses (2, 3, 4) angeordnet und deren Strahlung auf das durchströmende Wasser und gegebenenfalls auf eine ebenfalls in dem Gehäuse (2, 3, 4) untergebrachte Filtervorrichtung (22) gerichtet ist,
wobei
c) das Gehäuse (2, 3, 4) mindestens ein Fenster (29) enthält, über welches sichtbares Licht, welches von der UV-Lampe (12) direkt oder mittelbar durch Fluoreszenz erzeugt wird, von der UV-Lampe (12) nach außen gelangen- kann,
**dadurch gekennzeichnet, daß**
d) das oder die Fenster (29) an der Trennlinie zwischen einem ersten Gehäuseteil (2) und einem zweiten Gehäuseteil (4), welches an dem ersten Gehäuseteil (2) lösbar befestigt ist, angeordnet ist bzw. sind;
e) das Gehäuse (2, 3, 4) das Gehäuse einer sanitären Auslaufarmatur und ein Gehäuseteil ein einen Luftsprudler (14) aufweisender Auslaufkopf (4) ist.

2. Einrichtung nach Anspruch 1, **dadurch gekennzeichnet,**
**daß** in dem Lichtweg von der UV-Lampe (12) zum Äußeren des Gehäuses (2, 3, 4) ein optisches Filter (28) angeordnet ist, welches zumindest für UVC-Strahlung undurchlässig ist.

3. Einrichtung nach Anspruch 2, **dadurch gekennzeichnet,**
**daß** das optische Filter (28) ein Glasrohrstück ist, welches den Leuchtkörper (13) der UV-Lampe (12) zumindest bereichsweise umgibt.

4. Einrichtung nach einem der Ansprüche 1 bis 3, **dadurch gekennzeichnet, daß** in dem Lichtweg von der UV-Lampe (12) zum Äußeren des Gehäuses (2, 3, 4) ein unter dem Einfluß von UV-Licht im sichtbaren Bereich fluoreszierendes Element (30) angeordnet ist.

5. Einrichtung nach einem der Ansprüche 1 bis 4, **dadurch**
**gekennzeichnet, daß** das Fenster ringartig durch das Gehäuse geführt ist.

6. Einrichtung nach einem der Ansprüche 1 bis 4, **dadurch**
**gekennzeichnet, daß** mehrere auf einem Kreis liegende ringsegmentförmige Fenster (29) durch das Gehäuse (2, 3, 4) geführt sind.

7. Einrichtung nach einem der Ansprüche 1 bis 6, **dadurch**
**gekennzeichnet, daß** über das bzw. die Fenster (29) ein Ring (30) aus fluoreszierendem Material gelegt ist.

8. Einrichtung nach Anspruch 7, **dadurch gekennzeichnet,**
**daß** der Ring (30) aus einem zu Dichtzwecken geeigneten Material hergestellt ist.

## Claims

1. Apparatus for purifying water, having
a) a housing (2, 3, 4) which has an entry (9) and an exit (14) for the water;
b) a UV lamp (12) which is arranged inside the housing (2, 3, 4) and the radiation of which is directed at the water flowing through, and optionally at a filter device (22) which is also fitted in the housing (2, 3, 4),
wherein
c) the housing (2, 3, 4) contains at least one window (29) through which visible light, which is generated directly by the UV lamp (12) or indirectly by fluorescence, can reach the outside from the UV lamp (12) ,
**characterised in that**
d) the window or windows (29) is or are arranged on the dividing line between a first housing part (2) and a second housing part (4), which is releasably fastened to the first housing part (2) ;
e) the housing (2, 3, 4) is the housing of a sanitary outlet fitment and one housing part is an outlet
head (4) having an aerator (14).

2. Apparatus according to Claim 1, **characterised in that** an optical filter (28) which is non-transparent at least for UVC radiation is arranged in the light path from the UV lamp (12) to the exterior of the housing (2, 3, 4).

3. Apparatus according to Claim 2, **characterised in that** the optical filter (28) is a glass tube piece which encloses at least some of the luminous component (13) of the UV lamp (12).

4. Apparatus according to one of Claims 1 to 3, **characterised in that** an element (30) which fluoresces in the visible range under the effect of UV light is arranged in the light path from the UV lamp (12) to the exterior of the housing (2, 3, 4).

5. Apparatus according to one of Claims 1 to 4, **characterised in that** the window passes annularly through the housing.

6. Apparatus according to one of Claims 1 to 4, **characterised in that** a plurality of windows (29) in the form of annular segments lying on a circle pass through the housing (2, 3, 4).

7. Apparatus according to one of Claims 1 to 6, **characterised in that** a ring (30) of fluorescent material is placed over the window or windows (29).

8. Apparatus according to Claim 7, **characterised in that** the ring (30) is made of a material which is suitable for sealing purposes.

## Revendications

1. Dispositif pour stériliser de l'eau, comprenant :
a) un boîtier (2, 3, 4) présentant une entrée (9) et une sortie (14) pour l'eau ;
b) une lampe UV (12) placée dans le boîtier (2, 3, 4), dont les rayons sont dirigés vers l'eau traversant ledit boîtier et le cas échéant vers un dispositif de filtration (22) également logé dans le boîtier (2, 3, 4),
sachant que
c) le boîtier (2, 3, 4) comporte au moins une fenêtre (29) à travers laquelle de la lumière visible, qui est produite par la lampe UV (12) soit directement, soit indirectement par fluorescence, peut rayonner de la lampe UV (12) vers l'extérieur,
**caractérisé en ce que**
d) la ou les fenêtre(s) (29) est (sont) située(s) sur la limite entre une première partie de boîtier (2) et une seconde partie de boîtier (4) qui est fixée de manière amovible à la première partie de boîtier (2),
e) le boîtier (2, 3, 4) constitue le corps d'un robinet sanitaire et une partie de boîtier, d'un bec de sortie (4) présentant un aérateur (14).

2. Dispositif selon la revendication 1, **caractérisé en ce que** sur le trajet de la lumière entre la lampe UV (12) et l'extérieur du boîtier (2, 3, 4) est placé un filtre optique (28) qui est au moins imperméable aux rayons UVC.

3. Dispositif selon la revendication 2, **caractérisé en ce que** le filtre optique (28) est un morceau de tube en verre qui entoure au moins partiellement l'élément lumineux (13) de la lampe UV (12).

4. Dispositif selon l'une des revendications 1 à 3, **caractérisé en ce que** sur le trajet de la lumière entre la lampe UV (12) et l'extérieur du boîtier (2, 3, 4) est placé un élément (30) qui devient fluorescent dans le domaine visible sous l'influence de lumière UV.

5. Dispositif selon l'une des revendications 1 à 4, **caractérisé en ce que** la fenêtre traverse le boîtier à la manière d'un anneau.

6. Dispositif selon l'une des revendications 1 à 4, **caractérisé en ce que** plusieurs fenêtres (29) en forme de segment annulaire situées sur un cercle traversent le boîtier (2, 3, 4).

7. Dispositif selon l'une des revendications 1 à 6, **caractérisé en ce qu'**une bague (30) en une matière fluorescente est posée par-dessus la ou les fenêtre(s) (29).

8. Dispositif selon la revendication 7, **caractérisé en ce que** la bague (30) est fabriquée en une matière apte à réaliser l'étanchéité.
